Europäisches Patentamt

(19) European Patent Office

Office européen des brevets

(11) Publication number: **0 188 490**
**B1**

(12) **EUROPEAN PATENT SPECIFICATION**

(45) Date of publication of patent specification: **03.01.90**

(21) Application number: **85903321.9**

(22) Date of filing: **28.06.85**

(86) International application number:
**PCT/GB85/00288**

(87) International publication number:
**WO 86/00378 16.01.86 Gazette 86/02**

(51) Int. Cl.⁵: **F 16 B 37/12, B 25 B 27/14,
E 01 B 9/16, E 01 B 31/26**

(54) SECURING DEVICES.

(30) Priority: **29.06.84 GB 8416569**
**14.12.84 GB 8431580**

(43) Date of publication of application:
**30.07.86 Bulletin 86/31**

(45) Publication of the grant of the patent:
**03.01.90 Bulletin 90/01**

(84) Designated Contracting States:
**AT BE CH DE FR IT LI NL SE**

(56) References cited:
**DE-C- 126 935**
**DE-C- 144 331**
**FR-A- 990 787**
**GB-A- 179 144**
**GB-A- 449 916**
**LU-A- 39 292**

(73) Proprietor: **MULTICLIP CO. LTD.**
**Unit 2, Haxter Close, Belliver Industrial Estate**
**Roborough, Plymouth PL6 7DD (GB)**

(72) Inventor: **HENRY, Hugh, Richard**
**The Old House Pirbright**
**Surrey GU24 0JE (GB)**
Inventor: **MORTON, Reginald, Frederick**
**36 Fernside Park Tremar, Liskeard**
**Cornwall PL14 5HZ (GB)**

(74) Representative: **Kearney, Kevin David Nicholas
et al**
**KILBURN & STRODE 30 John Street**
**London, WC1N 2DD (GB)**

Courier Press, Leamington Spa, England.

# EP 0 188 490 B1

**Description**

The present invention relates to securing screw threaded devices in receptive substrates and devices for improving the grip of such devices in receptive substrates e.g. wood or plastic or composite screw receivable materials and to restoring the grip of a screw in a hole made by the screw in such materials after a period of use.

The invention has been developed with the problems of screw-in rail spikes so called screw-spikes in mind but is not limited in its applicability, it is believed, only to this application though it will be specifically described with reference to such an application.

Many wooden sleepers have the rails secured to them via metal chairs which are attached to the sleepers by screw-spikes which are threaded spikes screwed into predrilled undersize holes in the sleepers. The sleepers rest on ballast and with the passage of trains of varying weight and length travelling at various speeds the loads vary widely and in time cause displacement of the ballast. It is not known whether this causes or is the sole cause of loosening of the screw-spikes but in time the screw-spikes come out of the sleeper. This loosening might be thought to be an unscrewing. However from observations and tests we have carried out we do not think this is the case and think it more likely that the threads of the screw-spikes are riding up over the grooves in the wood of the sleeper. However the invention is not dependent on the accuracy or otherwise of this theory.

The present invention aims to reduce the tendency of screw-spikes to loosen from railway sleepers with the passage of trains and time.

The prior art has proposed, as explained in detail below, that a metal helix or spiral member should be inserted into the old thread in the hole and the screw spike then be screwed back into the helix, the thread of the screw being located between the turns of the helix which are forced outwardly by the screw and bite into the wood. The metal helix proposed in the art described below has been of hard metal such as steel. The applicants have found that better results are obtained and the spiral member is more easily made if a less hard material is used such as an aluminium alloy. The problem then is how to insert the spiral member into the hole prior to reinsertion of the iron or steel screw spike. It is necessary for the spiral member to be a tight fit in the old hole and this produces a considerable resistance to insertion. Use of insertion tools or keys as proposed in the prior art described below is not effective because the insertion tool would distort the drive members of the spiral members of the prior art if such spiral members were made of the softer material and thus fail to drive the spiral members into the hole.

The present invention provides the novel step of affording a spiral member of softer material and then over coming the insertion problem by providing novel cooperating structures on the spiral member and the insertion tool which enable the spiral member to be driven into the hole and the insertion tool to be removed leaving the spiral member properly located in the hole. The cooperating structures are a tail of the spiral member which is turned into the axis of the spiral member and back up the axis and an axial hole in the end of the tool in which the tail is adapted to nest, the end of the tool affording a shoulder to engage the spiral member so as to transmit driving force when rotated in one direction but not to transmit driving force when the tool is rotated in the other direction.

GB 179144, made public in 1923, describes a reinforcement for an old holding down bolt which enables the bolt to be re-employed in an existing hole. The reinforcement is a helix of iron or steel wire having an inner convex face which is disposed adjacent the bolt and an outer side which forms an acute angle and is intended to bite into the wood. The pitch of the helix is calculated to fit the thread of the old holding down bolt exactly. The lower end of the helix is bent inwardly and extends across the helix. This bent end enables the helix to be introduced into the hole in the wood by means of a key of cylindrical form, the lower end of which has a medial groove. The key is inserted down the helix so that the groove of the key engages the bent end of the helix and rotation of the key screws the reinforcement into the hole in the wood. The key is not provided with means for holding the turns of the helix in spaced apart relationship. The key can thus only be removed from the helix in the hole by being pulled straight out of the helix with no rotation of the key being possible.

On occasion such a helix can bind against the key. The present invention enables the key to be removed by an unscrewing movement in the reverse sense to the insertion movement.

French 990787, published 1951, disclosed a system for making a screw threaded lining in concrete from a helically wound profile made of a malleable metal e.g. aluminium alloy, which affords an inner female thread which is engaged by the male thread of the screw which is used. The outer face of the profile at the thread is reinforced by a V shaped profile 8, the material of which is preferably steel. The helical composite is not screwed into a hole but instead is enrobed in concrete. If the lining deteriorates it can be removed by a tool 5 inserted down the lining having a medial groove 6 which engages the turned across tail 4 at the end of the lining.

There is no suggestion that the lining could be inserted into a preformed hole either by means of the tool 5 or in any other way. This disclosure is thus not concerned with the same problem as the present invention.

German 144331, published in 1902, discloses a tool with a helical groove in which is nested the turns of a helical member of ribbon like shape with a rounded outer edge. The lower end of the tool has a transverse shoulder (e, f, i) the outer edge of which engages the inner face of the end g of the helical member which is

EP 0 188 490 B1

slightly bent inwardly. The metal from which the helical member is made is not identified.

As explained in the present application, when the spiral member is made of intermediately malleable material and is not provided with the drive tail of the present invention, the tool would distort the end of the spiral member and not be able to drive it into the hole.

There is thus no perception of the present invention and nothing which helps solve the problem with which the present invention is concerned.

Luxembourg Patent 39292, published in 1960, is concerned with the fixing of an element which may be cylindrical in a socket by means of a device consisting of a wire, preferably of steel, wound in the form of a helix.

The helix may be conical and can be used with cylindrical components or those which are conical. The lower turn of the helix serves to rest on the base of the element to be fixed and so to carry various turns into the socket.

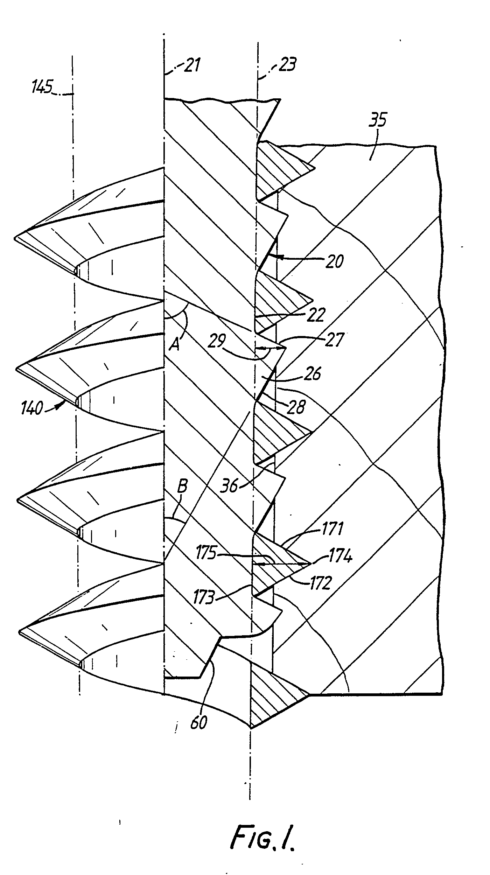

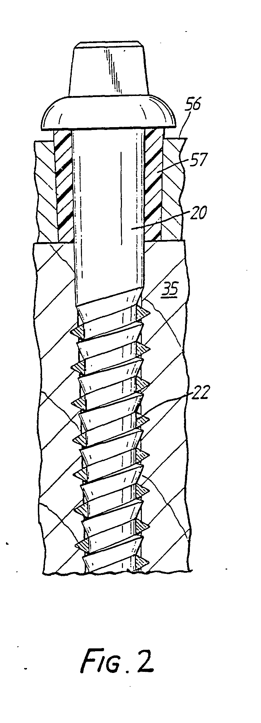

There is no suggestion that a tool is used to introduce the helical device into the socket. There is also no suggestion that the end 2 of the helix should be turned in. Indeed it is shown in Figures 1 and 2 as being located at the periphery of the helix and not near its axis. There is nothing to suggest any reason for the end of the helix being turned inwardly to the axis of the helix and then back up the axis.

Thus taking GB 179144 as the closest prior art according to the present invention there is provided a spiral member for increasing the resistance to pull-out of a screw made of hard material received in a hole in a body of screw-receiving material which is of softer material than the screw, the spiral member being cylindrical or being tapered towards one end and being turned inwardly at one end or at its narrow end when it is tapered to afford a drive pin adapted to be engaged by an insertion tool insertable down the inside of the spiral member so that the spiral member can be screwed into the hole from its bottom end, characterised in that the spiral member is made of material whose hardness is less than that of the screw and greater than the hardness of the screw receiving material and in that the drive pin has a tail which extends back down the axis of the spiral member and which is disconnectably engageable by the tool.

Preferably the spiral member is made of intermediately malleable material as defined herein.

Screw-spikes used in Great Britain have a square head for engagement by a spanner, wrench or other driving tool, and a flange which overlaps the hole through the chair and bears against the top surface of a wood or plastics ferrule which is located in the chair. Below the flange is a plain unthreaded shank which passes through the chair to the threaded portion of the screw-spike. The threads are relatively widespread e.g. the pitch is typically 12.7 mms (0.5 inches) or 13 mms from thread crest to thread crest. The threads are asymmetrical, the upper flank (nearer the head) being inclined at a greater angle (typically 70°) to the longitudinal axis of the screw-spike than the lower flank (which is typically inclined at an angle of 30° to the longitudinal axis).

The valley or trough region of the screw-spike between threads, which will be called the root herein, is typically flat or only very slightly curved rather than being V-shaped as in a metal screw or bolt and the length of the root between threads is typically about 6 mms. The distance, measured at right angles to the longitudinal axis of the screw spike, from the crest of a thread to the line joining the lowest points of the roots between threads will be known herein as the thread height.

This line joining the lowest points of the roots will be known as the root line and may be parallel to the longitudinal axis of the screw-spike or inclined at a very small angle thereto when the screw-spike is tapered, which is from shank to bottom end.

The term spiral member used herein includes spiral members wound around a cylinder i.e. a helix or around a cone so as to be tapered. As shown in the drawings this taper may only be slight. The pitch between adjacent turns is appropriate as required to fit the screw with which the spiral member will be used.

The term "intermediately malleable" as used herein means a material which when in a triangular profile of 50 to 70° apex angle is of low enough malleability or great enough hardness to be capable of the triangular profile being forced into softwood and preferably also into mahogany or jarrah wood, whilst being of greater malleability than steel and preferably also hard brass wire.

The spiral member is preferably made of aluminium or an aluminium alloy, such material is of intermediate malleability.

The invention also extends to a tool adapted to insert the spiral member according to the present invention, the tool comprising a shaft adapted to extend through the spiral member with engaging means at its bottom end adapted to fit the bottom end of the spiral member and driving means at its other end and stop means near the drive means adapted to prevent the shaft penetrating beyond the bottom of the hole in the sleeper and characterised in that the driving means are such as to enable the tool to releasably engage the spiral member so as to provide a driving engagement with the drive pin whilst the assembly is being screwed into the sleeper but a non-driving engagement when the tool is screwed out of the hole, by rotation in the opposite direction.

Preferably the tool is provided with means for holding the turns of the spiral member in axially spaced apart relationship.

More broadly the invention extends not only to the spiral member and to a tool for inserting the spiral member, but also to an assembly of the spiral member and the tool, which assembly is formed by the user in using the tool.

3

Thus according to another aspect of the present invention there is provided an assembly of a spiral member in accordance with the present invention and a tool in accordance with the present invention characterised in that the drive pin of the spiral member is located in an axial hole in the end of the tool, the relationship of the drive pin to the hole being such that whilst the assembly is screwed into a hole in a substrate from which a screw has been removed, the drive pin remains in the hole in the tool but the tool can rotate away from the drive pin and leave the spiral member in place.

The spiral member and the tool according to the present invention may be used in a method for fixing a screw in a hole which has been formed by screwing the screw into a screw receiving material which is softer than the screw itself, the method comprising unscrewing the screw from the hole, inserting a spiral member into the hole by screwing the device into the threads previously occupied by the screw, and then screwing the screw back into the hole; the spiral member at the outset (step a) having an outwardly facing pointed profile and a cross section such as to fit between adjacent turns of the thread on the screw and such that the dimension of a turn perpendicular to the longitudinal axis of the spiral (herein called the radial depth) is greater than the height of the thread of the screw with which that turn will finally be associated; the spiral member, prior to re-insertion of the screw having an internal diameter less than or equal to that of the root of the screw, and being located in the hole (step b) by screwing the spiral member in bottom end first by means of the rotatory tool inserted down the centre of the spiral member and disconnectably engaging the drive pin, the tool subsequently being removed, leaving the spiral member located in the thread; the screw threads of the screw, upon re-insertion of the screw (step c) being positioned between the turns of the spiral member and forcing the pointed profile of the spiral member into the screw-receiving material.

It will also be appreciated that the invention may also be used for increasing the resistance to pull out of a screw screwed into a receptive substrate e.g. wood which comprises forming a threaded hole in the wood with the screw, unscrewing the screw and removing it from the hole, and then carrying out steps a), b) and c) set out above.

The spiral member desirably even in step a) has an internal diameter less than that of the shank of the screw and a radial depth (and thus after step c) an external diameter) greater than that of the threads of the screw. This has the consequence that when the screw is threaded into the spiral member in the hole, the inner face or edge of the spiral member is thrust outwardly by the root of the screw against which it bears between the threads, forcing the spiral member out into the wood thereby increasing the grip and in effect reinforcing the hole.

The malleable material of the spiral member is thus preferably sufficiently ductile so as to be able to accommodate these forces stretching as necessary and allowing sliding movement between the screw and the spiral member.

In a further aspect of the present invention there is provided a spiral member of malleable material having a hardness less than that of steel, e.g. less than that of phosphor bronze or hard brass wire, but greater than that of soft wood and preferably greater than that of mahogany, e.g. having a hardness in the range 30—170 HB preferably 40—80 HB, e.g. 45—60. Such a securing device for screw rail spikes is desirably made of metal having such characteristics, for example aluminium or aluminium alloy, or aluminium alloys.

The ratio of the internal diameter of the spiral member (D1) to the diameter of the root of the screw (D2) prior to step c) is preferably in the range 0.7:1 to 0.99:1 e.g. 0.75:1 to 0.9.1. The spiral member typically has an internal diameter tapering from 18 mm at its top turn to 12 mms at its bottom turn while the root of the screw spike tapers less e.g. from 18 to 17 mms or is untapered.

The spiral member desirably has at least two turns, and preferably the spiral member at step c) has at least 50% of the number of turns of the thread on the screw, and most preferably before use the spiral member has the same number of turns or one more turn or no more than one less turn than the thread of the screw.

The ratio of the radial depth of the spiral member to the thread height of the screw is desirably in the range 1.01:1 to 2.5:1 or 1.01 to 2:1 or preferably about 2:1 e.g. 1.5:1 to 2.5:1.

The spiral member is preferably tapered. The taper of the spiral member enables the lower turns of the spiral member to be loose in the hole so that the member can be readily inserted and the upper turns to engage the wood and to some extent to be forced into the wood whilst the spiral member is being inserted or located into the hole i.e. during step b) and before step c). This forcing of the upper turns into the wood locks the spiral member in the hole sufficiently for the insertion tool to be removed (and here the preferred grooved tool described below is especially beneficial) so that the screw-spike can be inserted to carry out step c).

The bottom end of the spiral member is shaped so as to be disconnectably engageable by a tool inserted down the centre of the spiral member whereby the force to screw the spiral member into the hole can be exerted from the bottom end of the spiral member.

This enables the spiral member readily to be inserted in the hole because screwing the spiral member in from the bottom tends to cause it to reduce its diameter.

In a preferred form of the invention the cross-section of the spiral member affords an outwardly facing projection and an inner thrust face adapted to bear against at least a substantial part of the surface of the root of the screw between the threads.

In a preferred form of the invention the outwardly facing projection is afforded by the spiral member having a cross-section such that its outer part is triangular.

The inner thrust face is desirably disposed substantially parallel to the longitudinal axis of the spiral member or to a line which will be parallel to the surface of the root of the screw in step c), and is preferably flat.

The spiral member may also or instead have a cross-section affording at least one longitudinal thrust face which may be flat and is transverse to and desirably substantially perpendicular to the longitudinal axis of the spiral member.

The invention also extends to a spiral member of non-circular cross-section in which each turn affords an outwardly facing projection, an inner thrust face opposed to the axis of the spiral member, and at least one longitudinal thrust face, the spiral member preferably being made of stretchable metal which is more readily stretched than steel or preferably than hard brass wire.

The prior art discloses tools for inserting a spiral member which comprises a shaft adapted to extend through the spiral with engaging means at its bottom end adapted to fit the bottom end of the spiral and a driving means at its other end.

Simple forms of tool such as this may on occasion bind on the spiral member and jam in the hole and then have to be wrenched out which damages the spiral member which then has to be removed. This can be done with a double edged bladed withdrawal tool of flat tapered shape which is plunged axially down the hole so as to cut into and grip the spiral member on its upper inner face. The blade is then rotated so as to twist the malleable insert up on itself thus shrinking it. It can then be removed and discarded and a new spiral member inserted.

Clearly such problems are undesirable and the tool in accordance with the present invention makes the mode of insertion and removal of the spiral member easier and more rapid.

The embodiments described herein enable a spiral member of malleable material to be inserted rapidly and the insertion tool to be removed very quickly and moreover using conventional tools such as power wrenches.

In addition the tool does not project up above the level of the rails, except possibly right at the end of the withdrawal cycle.

Thus in the event that the insertion tool has to be left in place while a train is passing there will be little or no danger of the wheels of the train striking the tool.

The spiral member and the preferred form of cooperating insertion tool interact so that the spiral member can be threaded onto the tool prior to insertion in the hole, the assembly then screwed into the hole and then the tool screwed out of the hole leaving the spiral member in place.

This can be achieved by making the preferred form of tool in a form amounting to a cutdown version of the rail spike which is to be secured in the worn sleeper by means of the spiral member. Thus the rectangular head and circular shoulders are unchanged, the shank may be turned-down to reduce its diameter slightly to ensure free passage through the chair, and the shank at its junction with the first turn of the thread is turned-down sufficiently to prevent it gripping the inside of the hole.

The threads are turned-down to tapered flats, the taper being greater than that of the screw spike with which the spiral member is to be used. A rectangular groove is formed between each flat. The axial length of the grooves e.g. 1/4" (6.3 mm) may be such as to provide a clearance on either side of each turn of the spiral member e.g. the axial length of each groove being desirably 101 or 105 or 110 to 120 or 130 e.g. about 115% of the maximum axial length (e.g. 5.5 mm) of each turn of the spiral member. The depth of each rectangular groove is about 5/64" (2 mm).

It will be appreciated that the reference to turning down of the screw-spike does not dictate the way in which the tool may be made merely its form.

Whilst an exact fit could be used it may facilitate mounting of the spiral member on the tool for there to be some play between the spiral member and the tool in the axial direction.

It may also be desirable for the length of the spiral member to be slightly greater than the length of the corresponding grooves in the tool so that whilst there is some play allowing rapid winding of the spiral member onto the tool nonetheless the spiral member is gripped between the upper shoulder of the uppermost groove and the lower shoulder of the lowermost groove in which the upper and lowermost turns of the spiral member are nested.

As mentioned above engaging means are provided to enable the tool to releasably engage the spiral member so as to provide a driving engagement whilst the assembly is being screwed into the sleeper but a non-driving engagement when the tool is screwed out of the hole, by rotation in the opposite direction.

This is achieved by turning the lower end of the spiral member inwardly and then axially upwardly and providing a corresponding axial hole in the lower end of the tool in which the upturned tail of the spiral member can nest and a shoulder extending out from the hole e.g. radially to the circumference of the tool which engages with the inturned end of the spiral member, the free end of which is in effect locked in the axial hole of the tool. The senses of the shoulder and the inturned portions are arranged to be such that the shoulder engages the inturned end of the spiral member during the screwing-in movement and rotates away from it during the screwing out movement.

The invention may be put into practice in various ways and a number of specific embodiments and certain accessories for use therewith will be described by way of example to illustrate the invention with reference to the accompanying drawings, in which:

Figure 1 is a partial longitudinal cross-section of a wooden sleeper and shows the bottom region of a securing device of the invention in longitudinal cross-section when inserted in an old hole from which a screw-spike has loosened and been removed and with the old screw-spike partly screwed back into the hole, the half of the spike on the left-hand side of the centre line 21 being omitted so that the whole of the metal spiral can be shown on that side, the retracted surface of the wood being shown diagrammatically in the right-hand side;

Figure 2 is a diagrammatic view showing the screw-spike fully reinserted in the hole, having driven the spiral member outwardly into the wood of the sleeper and the axial length of the insert thus having shortened a certain amount, typically about 3/4 of a turn;

Figure 3A shows in elevation an inserting tool in accordance with the invention for inserting the spiral member;

Figure 3B is an elevation of the lower end of the tool shown in Figure 3A viewed from the opposite side and showing the interior structure in cross-section;

Figure 3C is an end view looking up the tool from the lower end;

Figure 4 is a view similar to Figure 3 and shows the tool of Figure 3 with a spiral member in accordance with the invention (shown in detail in Figure 6) wound onto the tool and the spiral member fully inserted in the sleeper just prior to commencement of the unwinding of the inserting tool which will leave the spiral member in the hole ready for insertion of a spike;

Figure 5 is an end view of the assembly of Figure 4 seen from below showing how the tool engages the spiral member during insertion yet is free to rotate away during tool withdrawal;

Figure 6A is a diagrammatic side elevation, the left-hand side in cross-section and the right-hand side in elevation showing the preferred insert profile of arrowhead shape shown in Figure 4;

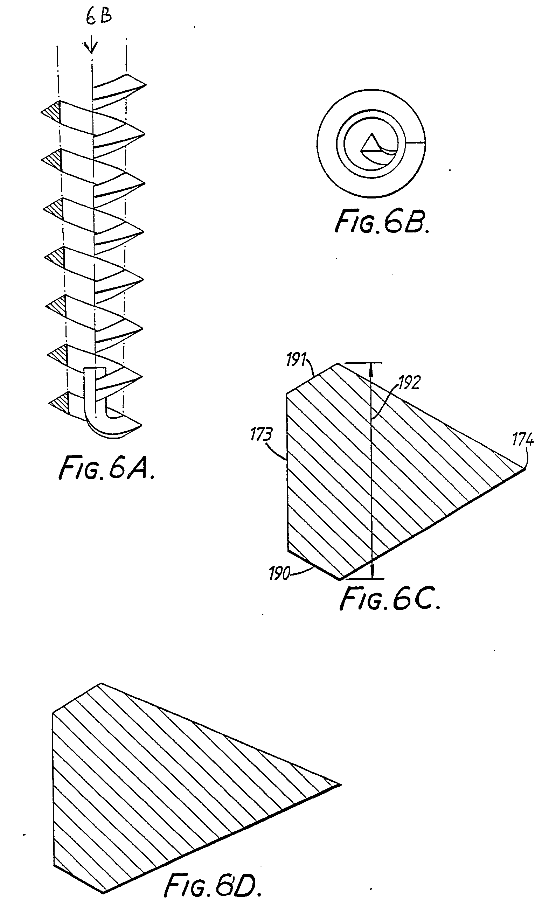

Figure 6 is a view looking down the axis of the insert in the direction of the arrow 6B showing the end of the insert turned back up the axis of the insert; and

Figures 6C and 6D are enlarged cross-sections of the preferred insert profile shown in Figure 6A and a modified form of greater radial dimension (Figure 6D).

Referring first to Figure 1 a portion of a British screw spike 20 is shown in longitudinal section, in the right-hand half of the drawing, the line 21 being the centre line of the spike. The root 22 of the spike is tapered from top to bottom, the line 23 joining the lowest points of each root between adjacent turns, the root line 23, being inclined at an angle to the centre line 21. The taper is typically 1 mm in the 4 inches (10.2 cm) length of the screw-threaded portion of the spike, but some screw-spikes are not tapered. The root carries a single helical thread 26 which engages the sleeper. The thread has an upper face 27 disposed at an angle A of about 70° to the longitudinal axis 21 of the screw-spike and a lower face 28 disposed at an angle B of about 30° to the same axis.

The thread extends out a distance 29 (the radial depth) from the root line 23 of about 3.I mms or more broadly 2.5—3.5 mms.

The precise dimensions of screw spikes used in some other countries differ from those used in the United Kingdom but are of similar orders of magnitude. The insert is modified for such other countries to have the same or similar relationship to the spike.

When the screw-spike is first screwed into the wood 35 of the sleeper the wood conforms closely to the surface of the root and the thread on the screw-spike. The condition which obtains after a period of use is shown in diagrammatic form on the right-hand side of Figure 1. Here the surface 36 of the wood which before use contacted or was close to the root 22 has retracted away from the root and the area of wood in contact with the upper surface 27 of the thread has been very severely reduced. The exact reason why the wood retracts in this way is not known but it may be that it is forced away from the root of the spike by the thread of the spike in the loosening process; also there may be corrosion or rotting of the wood caused by water penetrating between the wood and the metal screw-spike. The applicants have observed by tests that whilst the screw-spike can be screwed in to a tightness much the same as its original tightness which might be thought to give an adequate grip, nonetheless the resistance of the assembly to the screw-spike being pulled out has been very severely reduced, often to something as low as only 25% of its original value. A straight pull is of course, not the same as the forces which occur between the screw-spike and the sleeper in use but this change is surprising when the screw-spike seems as tightly fixed in the sleeper.

The British screw-spike is typically 7.5 inches (19 cms) long overall (though some are longer e.g. 8 inches (20.3 cms) for special purposes), and the threaded region tapers from 0.88 inches (2.24 cms) diameter at its bottom end out to 0.95 inches (2.41 cms) in diameter where it meets the unthreaded shank which is about 2.2 inches (5.6 cms) long surrounded in use by a plastics sleeve which passes through the chair to a flat bottomed round topped flange the flat bottom of which exerts pressure on the chair via the plastics sleeve. The screw-spike ends in a square head.

The screw-spike is usually made of mild steel which may be zinc coated to reduce corrosion in use. The pitch of the thread is typically 0.5 inches (1.3 cms); the thread angles and thread height have already been referred to.

Referring again to Figure 1 a first embodiment of a spiral member 140 in accordance with the invention is shown in section in the right-hand half of the drawings and in elevation in the left-hand half. The spiral member has a non-circular cross section of equilateral triangular shape having sides 171, 172, 173 and one side 173 of the triangle, the inner side, being generally parallel to the line 145 which is inclined to the axis 21 at a greater angle than is the root line 23 of the screw-spike. The side 173 affords an inner thrust face. This inner thrust face 173 bears against the root 22 of the spike between adjacent threads and as can be seen in Figure 1 is the same size or slightly longer than the length of the root, in the longitudinal direction of the screw-spike.

The apex 174 of the triangle provides an outwardly facing projection and a cutting edge to cut into the wall of the hole, the aim being to penetrate into the unaffected wood radially outwardly of the old thread and provide an enhanced grip. The radial depth 175 of the spiral member in this embodiment (the perpendicular distance) relative to the centre line from the inner thrust face 173 to the apex 174 is 5.2 mms.

The bottom turn of the spiral member is about 1.5—1.6 cms in internal diameter prior to insertion in a hole.

Screwing the spiral member 140 in from the bottom tends to tighten the spiral and thus reduce its diameter which facilitates its location in the shallow grooves left in the walls of the hole in the sleeper once a screw-spike has loosened and been withdrawn (e.g. screwed out).

The screw-spike 20 is shown in Figure 1 partly reinserted with its lower end (shown diagrammatically as 60) approaching but not yet contacting the last full turn of the spiral member 140. Only the portion of the spike to the right of the centre line 21 is shown in order to facilitate showing the shape of the turns of the spiral member 140. Figure 2 shows the screw spike fully inserted into the triangular spiral member in the sleeper with a plastics sleeve 57 spacing the unthreaded portion of the shank from the chair 56 (the bottom of the screw spike is not shown).

The root 22 forces each turn outwardly into the old shallow groove making it deeper and embedding the securing device in the wood of the sleeper. The threads of the screw-spike cut a new groove 61 in the portion 36 of the wood between each turn of the spiral member (see Figure 1).

We have found that the pull out strength of such an assembly when fully inserted is of the order of 3 tons in softwood sleepers and 6.0 tons in hardwood sleepers, i.e. the pull out strength is substantially restored or at least restored to the strength of the wood around the hole.

The spiral member may be made by producing e.g. extruding, the triangular section required (which in a first embodiment has sides 171, 172 and 173 6 mms long and has a radial depth 175 of 5.2 mms) and then coiling it round a mandrel of the required diameter. However in order to get the inner thrust face flat against the mandrel it is also necessary to twist the triangular section.

Twisting the extruded section around the mandrel alters the cross-section due to stretching at the outer apex 174; and thus the radial depth after stretching shrinks somewhat e.g. by about 5 to 10 or 15%.

The triangular metal wire is 20.5 inches (52 cms) long before coiling and to produce seven clockwise turns of about 2.5 cms internal diameter it must first be twisted clockwise evenly between its ends through 1 1/2 turns (540°). The mandrel is tapered so that the spiral member expands from an internal diameter for the bottom turn of 1.5—1.6 cms to an internal diameter for the top turn of 1.7 cms.

The above described spiral member made of aluminium alloy HE9 was tested for spring action. Thus it extended 1.75 inches (4.45 cms) in length over 1 second when its top end was held and a weight of 120 lbs (54.5 Kgs) was attached to the member 146, and recovered to a length of 5.5 inches (14 cms) (from an original length of 11.4 cms from the bottom of the clamp to the bottom of the member) within 1 second of being unloaded, the load having been maintained for 10 minutes. The axial length of the spiral member thus increased significantly.

This alloy which is in accordance with BS 1474 No. 6063 TF has a 0.2% proof stress value of 160 MPa, a tensile strength of 185 MPa and an elongation at break of 7%. Its composition is as follows: 0.2—0.6% Si, 0.35% Fe, 0.1% Cu, 0.1% Mn, 0.45—0.9% Mg, 0.1% Cr, 0.1% Zn, 0.1% Ti, balance aluminium.

Other grades of alloy thought likely to be useful are set out in Table 1 below with their physical properties.

TABLE 1

| Alloy | 0.2% Proof stress MPa | Tensile Strength MPa | Elongation % |
|---|---|---|---|
| HE9—6063 TB | 70 | 130 | 14 |
| HE30—6082 TB | 120 | 190 | 14 |
| HE30—5083 O | 125 | 275 | 13 |
| HE9—6063 TE | 110 | 150 | 7 |

Thus more broadly materials with tensile strengths in the range 130 to 275 and elongations of 7 to 14% are thought likely to be suitable.

7

As a comparison the spiral member 140 was made of mild steel wire about 5 to 6 mms in diameter and about 10 cms long with the pitch between threads about 1.3 cms i.e. close to, if not the same, as that of the spike with which it will be used.

The spiral, unlike a conventional helical spring, is tapered from what in use is its top end to its bottom end in a degree similar to that of the spike with which it will be used.

This spiral member has some spring action extending 0.25 inches (0.64 cms) in length over 1 second when its top end is held and a weight of 120 lbs (54.5 Kgs) is attached to its lower end and recovering to a length of 4.5 inches (11.4 cms) (from an original length of 11.4 cms from the bottom of the clamp to its lower end) within 1 second of being unloaded, the load having been maintained for 10 minutes. It thus did not stretch.

Such devices made of steel are quite heavy and since it is intended that they should be installed by an ordinary railway ganger without needing extra equipment (other than the tool 50) the weight of the individual devices may be significant, we prefer lighter metals. Surprisingly we have found that aluminium is both easier to screw in and gives pull out strengths similar to the otherwise identical mild steel device when used in round cross-section as described above.

We have found that profiles affording an outwardly facing projection or cutting edge are less likely to split the wood than do spiral members of round cross-section.

We have also found that the spiral member should be made of a material which whilst hard enough to penetrate into the wood, be it the hard, e.g. mahogany, or soft woods used for sleepers is soft enough or malleable enough to conform to the threads of the spike without jumping a thread.

The spiral member is in effect clamped by the screw thread and the wood into which it is forced and to conform to the threads seems to need to be able to be in effect extruded or drawn by the threads as the spike is screwed in. The spiral member appears to wind down into the sleeper by about 3/4 of a turn as the screw-spike is screwed in but also some stretching of the spiral member in length may be occurring. We are not yet certain exactly what mechanism is involved but we have found that with a mild steel spike and the hard or soft woods used for sleepers in the U.K. the aluminium alloy referred to above performs very well.

Other materials having similar hardness and drawability, ductility, malleability or elongation characteristics to such aluminium alloys are anticipated to be effective.

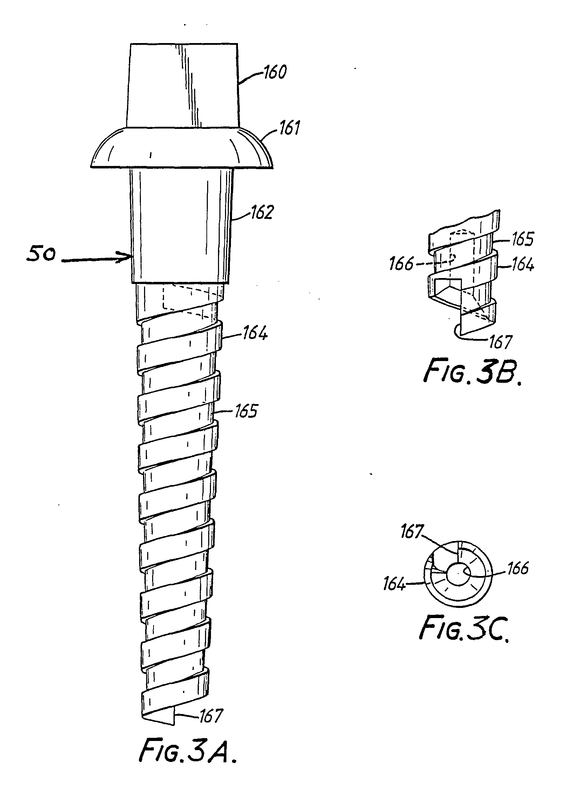

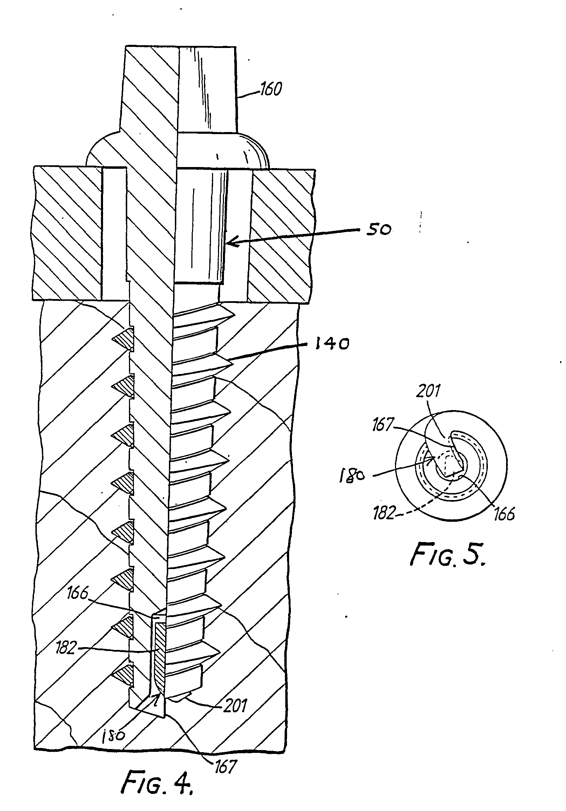

Figures 3A to 6D show a spiral member in accordance with the invention and an insertion tool in accordance with the invention.

Referring to Figures 3, 4 and 5 the tool 50 is in a form amounting to a cutdown version of the screw-spike which is to be secured in the worn sleeper by means of the spiral member. Thus the rectangular head 160 and circular shoulders 161 are unchanged, the shank 162 may be turned-down to reduce its diameter slightly to ensure free passage through the chair, and the shank 162 at its junction with the first turn of the thread is turned-down sufficiently to prevent it gripping the inside of the hole.

The threads are turned-down to tapered flats 164, the taper being greater than that of the screw-spike with which the insert is to be used namely 13—17 or 14—18 mm internal diameter as compared with 16—17 mm, the lower value being at the bottom of the spiral. A rectangular groove 165 is formed between each flat. The axial length of the grooves e.g. 1/4" (6.3 mm or 7 mm) is preferably such as to provide a clearance on either side of each turn of the spiral member so that the spiral member is relatively loose on the tool e.g. the axial length of each groove being desirably 101 or 105% or 110 to 120% or 130% e.g. about 115% of the maximum axial length (e.g. 5 mm) of each turn of the spiral member.

The depth of each rectangular groove is about 5/64" (2 mm).

The lower end of the spiral member 140 provides a drive pin 180 which is turned in to the longitudinal axis of the spiral member to provide a turned in portion 201 and is bent up and back to lie along the said axis and to extend about 1 turn length back straight up the axis of the spiral member to form an axial tail 182. This tail 182 of the drive pin is about 6 mms across and the bottom end of the insertion tool has a longitudinal axial hole 166 in it which is a close but free fit for the axial tail of the drive pin of the spiral member e.g. it may be a hole of about 7 mms diameter (see Figure 5). The hole 166 is longer axially than the tail 182 of the drive pin. The bottom end of the insertion tool also has a generally radially extending shoulder 167 extending out from the hole 166 (see Figures 3, 4 and 5). This shoulder engages the in-turned end portion 201 of the drive pin of the spiral member and as shown in Figure 5 is preferably rounded to ensure that the malleable drive pin of the spiral member is not sheared by the hard metal of the insertion tool.

The shortest length which the tail and axial hole can be and achieve their desired function is not known but they must be of such length and diameter relative to each other as to generate sufficient clamping action to prevent the shoulder 167 drawing the tail 182 out of the axial hole 166 before the spiral member is fully inserted in the hole with its upper end beneath the surface of the sleeper (so that it is locked in place in the sleeper; if this locking is not achieved the top turn would lift and the screw-spike would be more difficult to start in the spiral member).

The effect of friction of the upper turns and the end digging into the wood prevent the spiral member unwinding when the insertion tool is unwound.

It will be appreciated that if such clamping or frictional engagement does not occur the tail would be drawn out of the hole and thus due to the malleability of the preferred materials the spiral member would be deformed to conform to the groove in the insertion tool and would cease to be screwed in and the insertion tool would merely rotate through the stationary spiral member into the hole.

Figure 6C shows in cross-section a preferred form of profile for the spiral member. The cross-section in essence is an equilateral triangle, the apex of the triangle affording the outwardly facing projection 174 and the base of the triangle the thrust face 173. The height or radial depth 175 of the spiral member is 6.l mms as extruded before being wound on the mandrel; after winding it shrinks (as described above) to 5.7 mms.

The base corners of the triangle are chamfered so as to produce an arrowhead shape, the profile thus being symmetrical about the line from the apex to the mid-point of the base which means that the extruded profile can be wound in either sense around the mandrel to form the spiral member. The profile is asymmetrical about a line passing through the mid-point of the line from the apex to the mid-point of the base and parallel to the base. The chamfers 190 and 191 are such that the length of the base or thrust face 173 is 4 mms, the length of each chamfer which is straight is l.3 mms and the width 192 of the profile at the ends of the chamfers is 5.5 mms. These chamfers afford the longitudinal thrust faces and by being symmetrically disposed permit the extruded section to be wound in either sense. Only the chamfer facing the drive pin end actually operates as a longitudinal thrust face in use of the spiral member.

Some railway lines have larger holes e.g. the English Western Region and here the radial depth 175 as extruded is 7.4 mms (see Figure 6D) (i.e. the triangle is isoceles and after twisting has shrunk to 6.9 mms. The base and chamfer dimensions and angles remain as described for Figure 6C. In a modification the tail 182 is made thinner so as to be about 5.7 mms across so as to fit the hole in the tool without need to modify the tool.

As indicated above the distance between crests of adjacent turns of the screw-spike is 12.7 to 13 mms and the thread height is 3.1 mms.

The root length is typically 4 mms and the spiral member thus fits closely between adjacent turns, the angle of the lower chamfer of the spiral member is the same or closely similar to that of the upper flank of the thread on the screw-spike thus affording a close fitting longitudinal thrust face and indeed because of the malleability of the preferred material, aluminium alloy, from which the spiral member is made can deform during insertion of the screw-spike into close conformity with the upper flank of the thread on the screw-spike.

The upper chamfer on the spiral member having a steeper angle than the lower flank of the thread does not make substantial face contact therewith.

The pull out strength when using the profile of Figure 6C is typically 3.5 tons with softwood and 6.5 tons with hardwood.

Some screw-spikes have a shallow curved root rather than a flat root and the malleability of the preferred spiral member again therefore is of advantage enabling it to deform to close fitting face contact with such a curved root during insertion of the screw-spike.

## Claims

1. A spiral member for increasing the resistance to pull-out of a screw (20) made of hard material received in a hole in a body of screw-receiving material (35) which is of softer material than the screw, the spiral member (140) being cylindrical or being tapered towards one end and being turned inwardly at one end or at its narrow end when it is tapered to afford a drive pin (180) adapted to be engaged by an insertion tool (50) insertable down the inside of the spiral member so that the spiral member can be screwed into the hole from its bottom end, characterised in that the spiral member (140) is made of material whose hardness is less than that of the screw and greater than the hardness of the screw receiving material (35), and in that the drive pin (180) has a tail (182) which extends back down the axis of the spiral member and which is disconnectably engageable by the tool.

2. A device as claimed in Claim 1 characterized in that the spiral member is made of intermediately malleable material as defined herein.

3. A device as claimed in Claim 1 characterized in that the spiral member is made of aluminium or aluminium alloy.

4. A tool for inserting a spiral member as claimed in any one of Claims 1 to 3, the tool comprising a shaft adapted to extend through the spiral member with engaging means (166, 167) at its bottom end adapted to fit the bottom end of the spiral member and driving means (160) at its other end and stop means (161) near the drive means adapted to prevent the shaft penetrating beyond the bottom of the hole in a screw receiving body, the engaging means comprising a shoulder extending out from the center to the circumference of the tool such as to enable the tool to releasably engage the spiral member so as to provide a driving engagement with the drive pin whilst the assembly is being screwed into the sleeper but a non-driving engagement when the tool is screwed out of the hole, by rotation in the opposite direction, characterized in that the engaging means comprises an axial hole in the end of the tool, the shoulder extending out from the hole to the circumference of the tool.

5. An assembly of a spiral member as claimed in any one of Claims 1 to 3 and a tool as claimed in Claim 4 characterized in that the axial tail of the drive pin of the spiral member is located in an axial hole in the end of the tool, the relationship of the tail to the hole being such that whilst the assembly is screwed into a hole in a substrate from which a screw has been removed the tail remains in the hole in the tool but the tool can rotate away from the tail and leave the spiral member in place.

# EP 0 188 490 B1

**Patentansprüche**

1. Schraubenförmiges Einsatzteil zur Erhöhung des Lösewiderstandes einer aus hartem Material gefertigten Schraube (20), die in einer Bohrung in einem Körper aus einem die Schraube aufnehmenden Material (35) sitzt, das weicher als das Material der Schraube ist, wobei das schraubenförmige Einsatzteil (140) zylindrisch oder sich zu seinem einen Ende verjüngend ausgebildet und an einem Ende oder, falls es sich verjüngt, an seinem schmaleren Ende zur Ausbildung eines Mitnehmerstiftes (180) nach innen umgebogen ist, wobei der Mitnehmerstift zum Eingriff mit einem Einsteckwerkzeug (50) dient, das durch das Innere des schraubenförmigen Einsatzteiles so hindurchsteckbar ist, daß das schraubenförmige Einsatzteil von seinem bodenseitigen Ende her in die Bohrung eingeschraubt werden kann, dadurch gekennzeichnet, daß das schraubenförmige Einsatzteil (140) aus einem Material gefertigt ist, dessen Härte geringer als die des Materiales der Schraube und größer als die Härte des die Schraube aufnehmenden Materiales (35) ist, und daß der Mitnehmerstift (180) einen Endabschnitt (182) aufweist, der sich längs der Achse des schraubenförmigen Teiles nach rückwärts erstreckt und in lösbaren Eingriff mit dem Einsteckwerkzeug bringbar ist.

2. Vorrichtung nach Anspruch 1, dadurch gekennzeichnet, daß das schraubenförmige Einsatzteil aus einem "mittel-verformbaren" Material, wie in der Beschreibung definiert, besteht.

3. Vorrichtung nach Anspruch 1, dadurch gekennzeichnet, daß das schraubenförmige Einsatzteil aus Aluminium oder einer Aluminiumlegierung besteht.

4. Werkzeug zum Einstecken in ein schraubenförmiges Einsatzteil nach einem der Ansprüche 1 bis 3, wobei das Werkzeug einen Schaft zum Hindurchragen durch das schraubenförmigen Einsatzteil aufweist, der an seinem bodenseitigen Ende mit Eingriffsmitteln (166, 167), die mit dem bodenseitigen Ende des schraubenförmigen Einsatzteiles zusammenpassen und an seinem anderen Ende mit Antriebsmitteln (160) sowie mit einem Anschlag (161) nahe bei diesen versehen ist, der dazu dient zu verhindern, daß der Schaft über den Boden der Bohrung in einem die Schraube aufnehmenden Körper hinaus eindringt, wobei die Eingriffsmittel eine Schulter aufweisen, die sich so von der Mitte zum Außenumfang des Werkzeuges erstreckt, daß dieses zur Ausbildung eines Antriebseingriffs mit dem Mitnehmerstift während des Einschraubens der ganzen Anordnung in den Aufnahmekörper lösbar in Eingriff mit dem schraubenförmigen Einsatzteil bringbar ist, jedoch mit diesem in nicht-antreibendem Eingriff beim Herausschrauben des Werkzeugs aus der Bohrung durch Drehung in entgegengesetzter Richtung steht, dadurch gekennzeichnet, daß die Eingriffsmittel eine axiale Bohrung im Ende des Werkzeuges aufweisen und die Schulter sich von dieser Bohrung nach außen zum Außenumfang des Werkzeuges erstreckt.

5. Anordnung aus einem schraubenförmigen Einsatzteil nach einem der Ansprüche 1 bis 3 und einem Werkzeug nach Anspruch 4, dadurch gekennzeichnet, daß der axiale Endabschnitt des Mitnehmerstiftes des schraubenförmigen Einsatzteiles in einer axialen Bohrung im Ende des Werkzeuges aufgenommen ist, wobei der Endabschnitt und die Bohrung so einander zugeordnet sind, daß beim Einschrauben der Anordnung in eine Bohrung in einem Substrat, aus der eine Schraube entfernt wurde, der Endabschnitt in der Bohrung im Werkzeug verbleibt, aber das Werkzeug auch vom Endabschnitt weggedreht werden kann und dabei das schraubenförmige Einsatzteil in seiner Stellung beläßt.

**Revendications**

1. Organe hélicoïdal destiné à augmenter la résistance à l'arrachement d'une vis (20) faite d'une matière dure et reçue dans un trou ménagé dans un corps (35) en matière destinée à la recevoir qui est plus tendre que la vis, l'organe hélicoïdal (140) étant cylindrique ou allant en diminuant de façon conique vers l'une de ses extrémités et étant recourbé vers l'intérieur à une extrémité ou à son extrémité étroite, s'il est conique, afin de fournir un doigt d'entraînement (180) propre à être attaqué par un outil d'insertion (50) pouvant être inséré vers le bas à l'intérieur de l'organe hélicoïdal, de telle sorte que cet organe hélicoïdal puisse être vissé dans le trou à partir de son extrémité inférieure, caractérisé en ce que l'organe hélicoïdal (140) est fait d'une matière dont la dureté est inférieure à celle de la vis et supérieure à celle de la matière (35) destinée à recevoir la vis, et en ce que le doigt d'entraînement (180) comporte une queue (182) qui revient le long de l'axe de l'organe hélicoïdal et qui peut être engagée de façon détachable par l'outil.

2. Dispositif suivant la revendication 1, caractérisé en ce que l'organe hélicoïdal est fait d'une matière de malléabilité moyenne définie plus haut.

3. Dispositif suivant la revendication 1, caractérisé en ce que l'organe hélicoïdal est en aluminium ou en alliage d'aluminium.

4. Outil pour insérer un organe hélicoïdal suivant l'une quelconque des revendications 1 à 3, cet outil comprenant une tige destinée à s'étendre à travers l'organe hélicoïdal et présentant un moyen d'engagement (166, 167), à son extrémité inférieure, propre à s'ajuster sur l'extrémité inférieure de l'organe hélicoïdal et un moyen d'entraînement (160), à son autre extrémité, ainsi qu'un moyen d'arrêt (161), à proximité du moyen d'entraînement, propre à empêcher la tige de pénétrer au-delà du fond du trou ménagé dans un corps destiné à recevoir la vis, le moyen d'engagement comprenant un épaulement qui s'étend vers l'extérieur depuis le centre vers la circonférence de l'outil de façon à permettre à cet outil d'engager l'organe hélicoïdal de manière détachable afin de créer un engagement d'entraînement avec le doigt d'entraînement pendant le vissage de l'ensemble dans la traverse, mais un engagement de non- entraînement lorsque l'outil est dévissé du trou par rotation dans le sens opposé, caractérisé en ce que le moyen d'engagement comprend une forure axiale dans l'extrémité de l'outil, l'épaulement s'étendant vers l'extérieur depuis la forure jusqu'à la circonférence de l'outil.

5. Ensemble d'un organe hélicoïdal suivant l'une quelconque des revendications 1 à 3 et d'un outil suivant la revendication 4, caractérisé en ce que la queue axiale du doigt d'entraînement de l'organe hélicoïdal est logée dans une forure axiale prévue dans l'extrémité de l'outil, la relation de la queue avec la forure étant telle que, pendant que l'ensemble est vissé dans un trou dans un substrat duquel une vis a été retirée, la queue reste engagée dans la forure de l'outil, mais que l'outil peut être dégagé par rotation de la queue en laissant l'organe hélicoïdal en place.

Fig. 1.

FIG. 2

160

161

162

50

164

165

167

FIG.3A.

165
166
164

167

FIG.3B.

167

166

164

FIG.3C.

*Fig. 4.*

*Fig. 5.*

FIG.6A.

FIG.6B.

FIG.6C.

FIG.6D.